# EUROPEAN PATENT SPECIFICATION

(11) **EP 2 333 282 B1**
(45) Date of publication and mention of the grant of the patent: **23.03.2016**
(21) Application number: 10251989.9
(22) Date of filing: 23.11.2010
(51) Int. Cl.: F02C 9/20, F02K 1/08, F02K 1/09, F02K 3/06, F02K 3/075

(54) **Variable area fan nozzle stiffeners and placement**
Verstellbare Gebläsedüsenversteifungen und Anordnung
Raidisseurs de buse de ventilateur à zone variable et mise en place

(30) Priority: 24.11.2009 US 624542
(43) Date of publication of application: 15.06.2011
(73) Proprietor: United Technologies Corporation, Hartford, CT 06101 (US)
(72) Inventor: Schwark, Jr., Fred W., Plainville, NY 10520 (US); Owen, William D., Windsor, CT 06095 (US); Atassi, Oliver V., Longmeadow, Massachusetts 01106 (US)
(74) Representative: Leckey, David Herbert

(56) References cited:
- EP-A1- 1 884 650
- WO-A1-2008/045049
- FR-A1- 2 184 021

## Description

### BACKGROUND

This disclosure relates to a variable area fan nozzle for a turbofan engine that includes features for controlling mode shape of the airfoil.

Gas turbine engines that have an engine cycle modulated with a variable area fan nozzle (VAFN) provide a smaller fan exit nozzle diameter during cruise conditions and a larger fan exit nozzle diameter during take-off and landing conditions. The VAFN typically includes an airfoil that moves between desired positions.

A design requirement for the VAFN is to maintain structural integrity throughout the flight envelope of the aircraft. Flow turbulence and mechanical vibrations subject the VAFN to both tonal and broadband aerodynamic loads that cause the nozzle to elastically deflect from a desired position.

A nacelle assembly having the features of the preamble of claim 1 is disclosed in EP-A-1884650. Other nacelle assemblies are disclosed in FR-A-2184021 and WO 2008/045049 A1.

### SUMMARY

The present invention provides a nacelle assembly as set forth in claim 1.

The stiffeners are mounted to between the second fan nacelle section and the first fan nacelle section and modify mode shapes and natural frequencies produced by the unsteady aerodynamic loads on a VAFN to substantially reduce and/or eliminate flutter within a desired flight envelope.

These and other features disclosed herein can be best understood from the following specification and drawings, the following of which is a brief description.

### BRIEF DESCRIPTION OF THE DRAWINGS

Figure 1 is a schematic view of an example gas turbine engine including a variable area fan nozzle.
Figure 2 is a schematic cross section of the disclosed variable area fan nozzle in a first position.
Figure 3 is a schematic cross section of the disclosed variable area fan nozzle in a second position.
Figure 4 is a partial view of a nacelle section including example stiffening assemblies.
Figure 5 is a top view of an example stiffener assembly mounted to a leading edge of a nacelle section.
Figure 6 is a side view of the example gas turbine engine including the example variable area fan nozzle.
Figure 7 is a rear perspective view of the example variable area fan nozzle.
Figure 8 is a rear sectional view of the example variable area fan nozzle.
Figure 9 is perspective view of an example thrust reverse assembly including a variable area fan nozzle.
Figure 10 is a perspective view of the example thrust reverse assembly in an open position.

### DETAILED DESCRIPTION

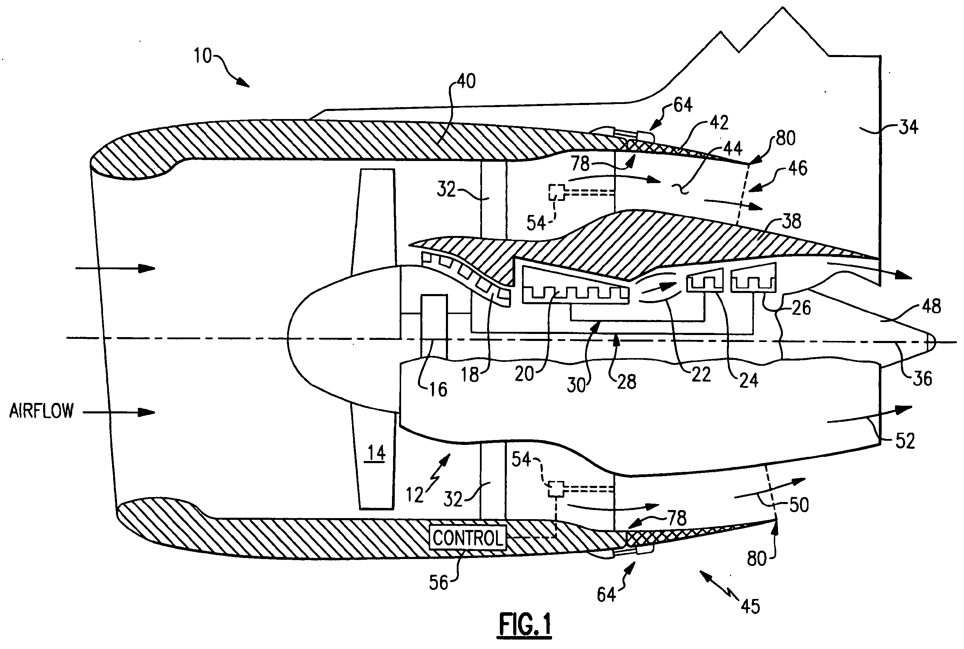

Referring to Figure 1, an example gas turbofan engine 10 is mounted to a pylon 34 and includes a core engine 12 that drives a fan 14 through a gear drive mechanism 16. The core engine 12 is housed within a core nacelle 38 and includes a low spool 28 and a high spool 30. The low spool 28 includes a low pressure compressor 18 that is driven by a low pressure turbine 26. The high spool 30 includes a high pressure compressor 20 that is driven by a high pressure turbine 24. A combustor 22 is disposed between the high pressure compressor 28 and the high pressure turbine 24. The high and low spools 30, 28 rotate about an axis 36. The gear mechanism 16 is driven by the low spool 28 that in turn drives the fan 14.

The example engine 10 is a high-bypass geared aircraft engine with a high bypass ratio. The turbofan 14 is much larger than the core engine 12 and provides most of the thrust produced by the engine 10. The gear mechanism 16 provides a desired reduction in speed of the fan 14 to provide the desired thrust output. As appreciated, other engine configurations will benefit from this disclosure and are within the contemplation of this invention.

A fan nacelle 40 at least partially surrounds the core nacelle 38 and defines a bypass flow path 44 around the core nacelle 38. Airflow into the fan nacelle 40 is communicated into the core engine 12. The airflow is compressed by the low pressure compressor 18 and the high pressure compressor 20 before being directed into the combustor 22. Fuel is mixed with air in the combustor 22 and ignited to produce a gas flow that drives the turbines 24, 26. The turbines 24, 26 in turn drive the compressors 18 and 20 and the fan 14 through the gear drive mechanism 16. The gas flow expands through the turbines 24, 26 and is exhausted through the core flow path 52 defined as an annular opening between a nose cone 48 and the core nacelle 38.

The core engine 12 and core nacelle 38 are supported within the fan nacelle 40 along the axis 36 by mount supports 32. The bypass flow path 44 is defined between the core nacelle 38 and the fan nacelle 40 as an annular channel for bypass air flow 50. The example engine 10 is a high bypass configuration where the majority of airflow is directed through the bypass flow path 44. Bypass air flow 50 is discharged through a variable area fan nozzle (VAFN) 45 that defines a nozzle exit area 46 between the fan nacelle 40 and the core nacelle 38.

Thrust produced by the engine 10 is a function of density, velocity and area. Manipulating these parameters varies the direction and magnitude of thrust generated by the bypass flow 50. The VAFN 45 varies the area of the fan nozzle exit area 46 to adjust the pressure ratio of the bypass flow 50. Low pressure ratio turbofans are desirable for their high propulsive efficiency. However, low pressure ratio fans are susceptible to fan stability and flutter problems at low power and low flight speeds. The VAFN 45 provides for the engine to operate at a more favorable fan operating line at low power, avoiding the instability region and still provide the relatively smaller nozzle area necessary to obtain a high-efficiency fan operating line at cruise.

A significant amount of thrust is provided by the bypass flow 50 due to the high bypass ratio. The fan 14 of the engine 10 is preferably designed for a particular flight condition -- typically cruise at 0.8M and 35,000 feet. As the fan 14 is efficiently designed at a particular fixed stagger angle for an efficient cruise condition, the VAFN 45 is operated to effectively vary the fan nozzle exit area 46 to adjust fan bypass air flow 50 such that the angle of attack or incidence on the fan blades is maintained close to the design incidence for efficient engine operation at other flight conditions, such as landing and takeoff to thus provide optimized engine operation over a range of flight conditions with respect to performance and other operational parameters.

The example VAFN 45 includes a second fan nacelle section 42 that is movable axially relative to the first fan nacelle section 40 to adjust the exit area 46. The second nacelle section 42 is driven axially by actuators 54 commanded by a controller 56.

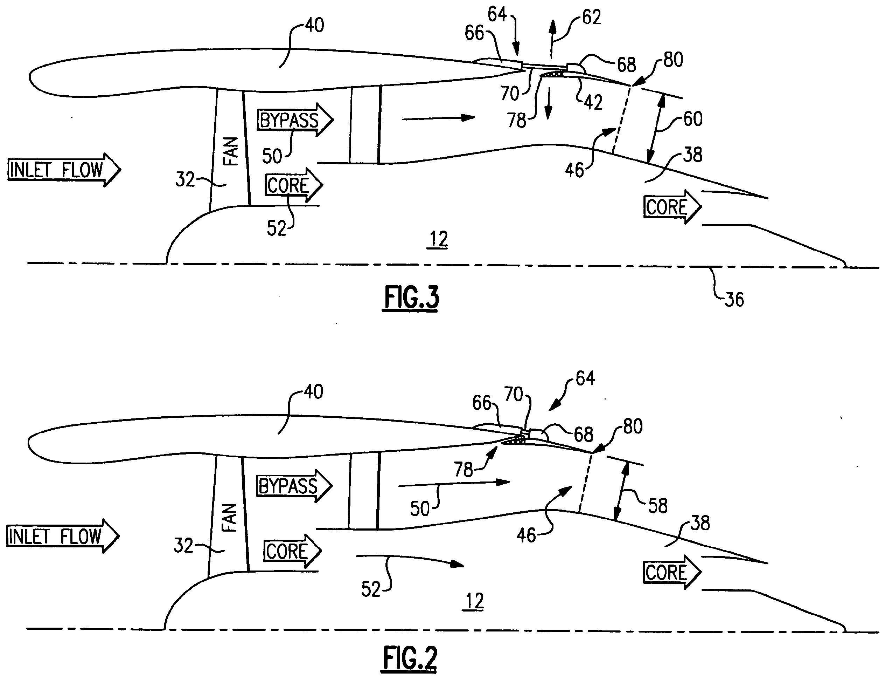

Referring to Figures 2 and 3, the VAFN 45 includes the second fan nacelle section 42 that axially slides along in the direction of the axis 36 to change the effective area of the fan nozzle exit area 46. As the stroke of the second fan nacelle section 42 varies a leading edge 78 of the second fan nacelle section 42 moves axially away from the fan nacelle section 40.

The second fan nacelle section 42 slides axially to change the physical area and geometry of the bypass flow path 44 during particular flight conditions. The bypass flow 50 is effectively altered by sliding of the second fan nacelle section 42 relative the fan nacelle section 40 between a closed position (Figure 2) and an open position (Figure 3). In the closed position (Figure 2), the exit area 46 is at the smallest size provided by the distance 58 from a corresponding portion of the core nacelle 38. In the open position (Figure 3) the exit area 46 is at a maximum and is provided by an increased distance 60 between a trailing edge of the second fan nacelle section 42 and the core nacelle 38.

In operation, the VAFN 45 communicates with the controller 56 to move the second fan nacelle section 42 relative the first fan nacelle section 40 to effectively vary the area defined by the fan nozzle exit area 46. Various control systems including an engine controller or an aircraft flight control system may also be usable with the present invention. By adjusting the axial position of the entire periphery of the second fan nacelle section 42, engine thrust and fuel economy are maximized during each flight regime by varying the fan nozzle exit area 46.

The VAFN 45 encounters unsteady loads caused by mechanical vibrations and high pressure differences on opposing sides of the nacelle structures 40, 42. The structural responses from unsteady loads upon the VAFN 45 are greatest at the resonant frequencies so that the VAFN 45 is designed to withstand many cycles of this forced vibration. Moreover, under certain flow conditions the phasing between the unsteady aerodynamic loads and the displacement of the resonant modes of the structure are such that the net work of the fluid on the structure over an oscillation period is greater than zero. When this occurs, the amplitude of the deflections grows substantially over time resulting in high stress in the structure. This phenomenon is referred to as aeroelastic instability or flutter.

Such flutter or aeroelastic instability of the example second fan nacelle section 42 can cause undesired deflections and variation of the exit flow area 46. Moreover, flow turbulence and mechanical vibration subject the VAFN 45 to both tonal and wide ranging aerodynamic loads. Further under certain flow conditions the phasing between the unsteady aerodynamic loads and the displacement of the resonant modes of the VAFN 45 can cause and magnify deflections of the second fan nacelle section 42. These loads can cause undesired deflections or flutter of the second fan nacelle section 42 in the radial direction indicated by arrows 62. Such fluttering and deflection of the second fan nacelle sections 42 can result in undesired variation of the nozzle exit area 46.

The example VAFN 45 includes stiffeners 64 mounted between the first fan nacelle section 40 and the second fan nacelle section 42 to modify mode shapes and natural frequencies produced to substantially reduce and/or eliminate flutter caused by unsteady aerodynamic loads within desired flight operating ranges.

The stiffeners 64 include a first base 66 mounted to the fan nacelle 40 and a second base 68 mounted at the leading edge 78 of the second fan nacelle section 42. Although the stiffener base 68 is mounted near the leading edge 78, other locations that provide the desired flutter control are within the contemplation of this disclosure. A connector 70 is received in both the first and second bases 66, 68 and controls radial movement to the second fan nacelle section 42 relative to the fan nacelle 40. The connector 70 slides axially with movement of the second fan nacelle section 42 between the open and closed positions. The connector 70 is disposed and received in each of the first base 66 and the second base 68 so as to control and prevent undesired outward radial movement of the second fan nacelle section 42. The stiffeners 64 are not powered to cause movement of the second nacelle section 42 axially. The stiffeners 64 are driven by movement, and do not restrict axial movement of the second nacelle section 42. Because the stiffeners 64 control and substantially reduce radial movement, the frequency and mode shape of the second fan nacelle section 42 are maintained within desired operating parameters.

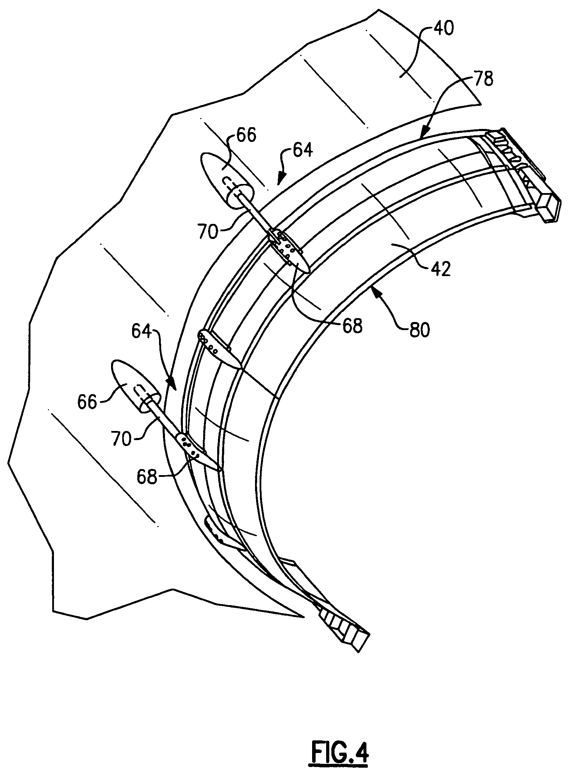

Referring to Figure 4, the stiffeners 64 are mounted at circumferentially spaced locations between the first fan nacelle section 40 and the second fan nacelle section 42. The second base 68 is mounted to the second nacelle section at the leading edge 78 to provide the desired aeroelastic control.

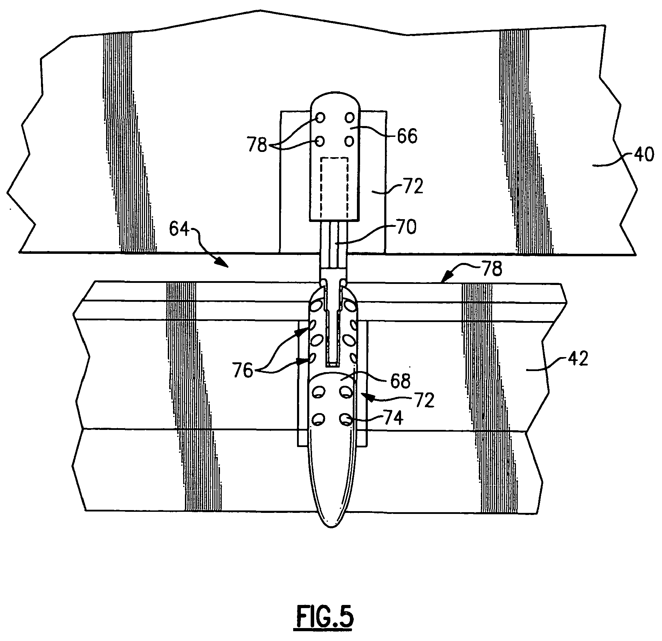

Referring to Figure 5, second base 68 is attached to a core portion 72 that forms a base on the second nacelle section 42. The example core portion 72 is of a higher density than the surrounding portions of the second nacelle section 42 to facilitate attachment of the second base 68. A core portion 72 is also disposed on the first fan nacelle section 40 to facilitate attachment of the first base 66.

Each of the first and second bases 66, 68 include openings 74 for fasteners that extend through the base and into the core portion 72. The openings 74 may then be filled with a sealant to provide a smooth outer surface and to maintain fastener integrity.

The second base 68 is mounted to the second nacelle section 42 at the leading edge 78. The leading edge 78 is that edge that is most upstream on the second nacelle section 42. As appreciated, the second nacelle section 42 includes a trailing edge 80 (Figure 4) that is rearward of the second base 68 illustrated in Figure 5.

The example connector 70 is attached with fasteners that extend through openings 76 in the second base. The opposing end of the example connector 70 extends into the first base 66 but is not fastened to the first base. Instead, the connector 70 moves freely within the first base 66 to provide unrestricted axial movement of the second nacelle section 42 relative to the first nacelle section 40.

Axial placement of the second base section 66 at and adjacent to the leading edge 78 of the second nacelle section 42 provides the desired mode shape and frequency changes required to maintain the desired position of the nacelle section 42 when extended axially away from the first fan nacelle section 40.

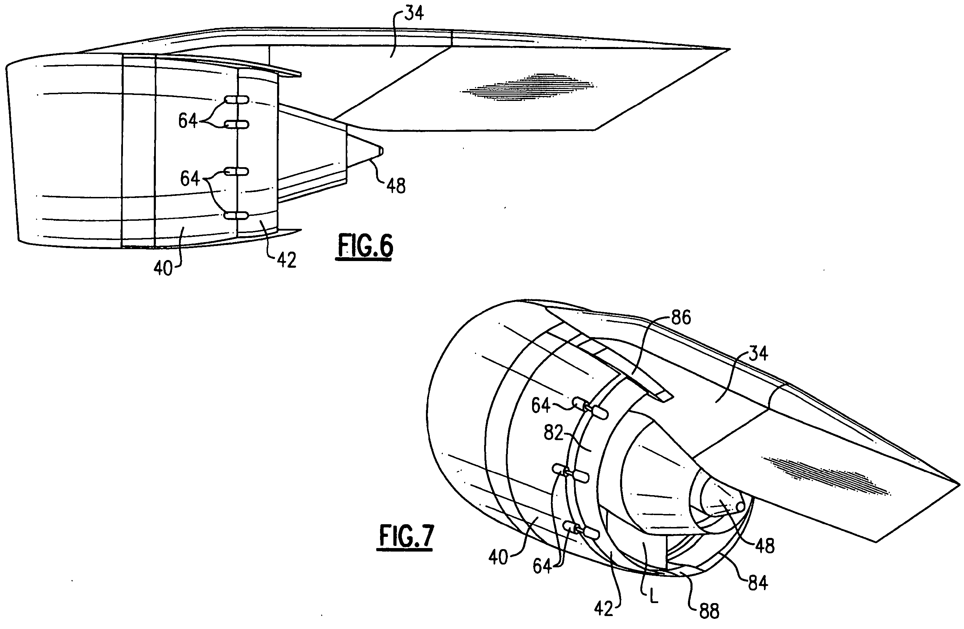

Referring to Figure 6, the stiffeners 64 are mounted along an outer surface of the fan nacelle 40 and are spaced apart about the outer surface. Each of the stiffeners 64 includes the first base 66 and the second base 68 with the connector 70 received therebetween. Each of the stiffeners 64 moves with the second nacelle section 42 to constrain relative radial movement responsive to mechanical and aeroelastic phenomena Figure 6 illustrates the VAFN 45 in a closed position where the exit area 46 is smallest.

Referring to Figure 7, the example second fan nacelle section 42 comprises first and second sectors 82, 84. The sectors 82 and 84 are connected to a portion of the pylon 34 at an upper track assembly 86 and to a lower track assembly 88. The upper and lower track assemblies 82 and 84 provide for axial movement of the sectors 82 and 84.

The sectors 82, 84 are movable in unison or independently by actuators 54 to provide either a uniform exit area modifications or asymmetric exit area modification that can be utilized to provide a directional thrust. The example illustrated in Figure 7 is an open condition that provides the maximum exit area as would be utilized during take-off and landing conditions. The number of stiffeners 64 mounted between the fan nacelle sections 40, 42 is determined to tailor the stiffness of the second fan nacelle section 42 to desired operation parameters. That is, more or less stiffeners 64 can be provided to tailor the aeroelastic characteristics of the second fan nacelle section 42.

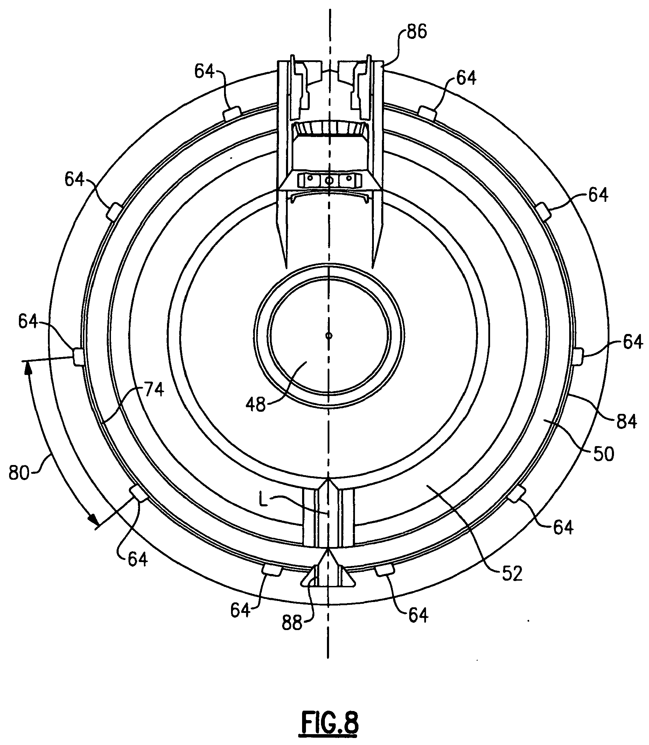

Referring to Figure 8, in one non-limiting embodiment, a plurality of stiffeners 64 is disposed about the circumference of the fan nacelle 40. The example stiffeners are spaced apart circumferentially a length 80 determined to tailor the mode shape and natural frequency characteristics of the second fan nacelle section 42 such that a desired position is maintained within specified ranges throughout the entire operational envelope of the engine 10.

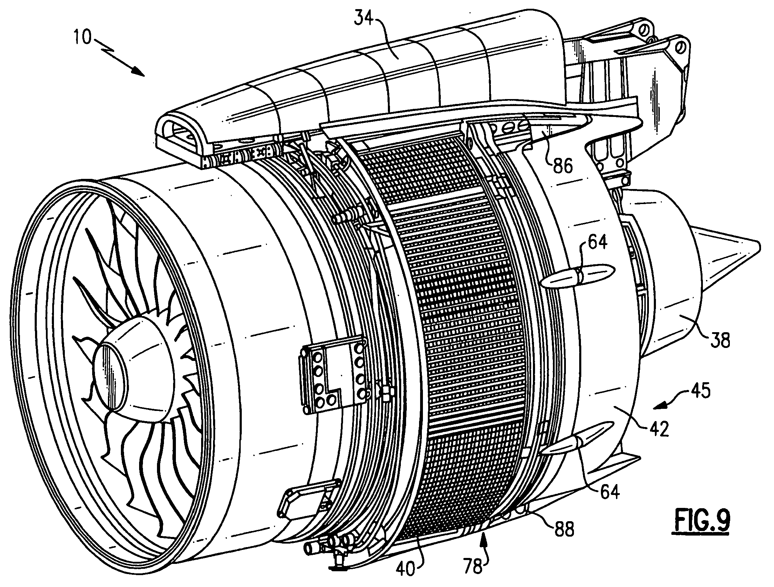

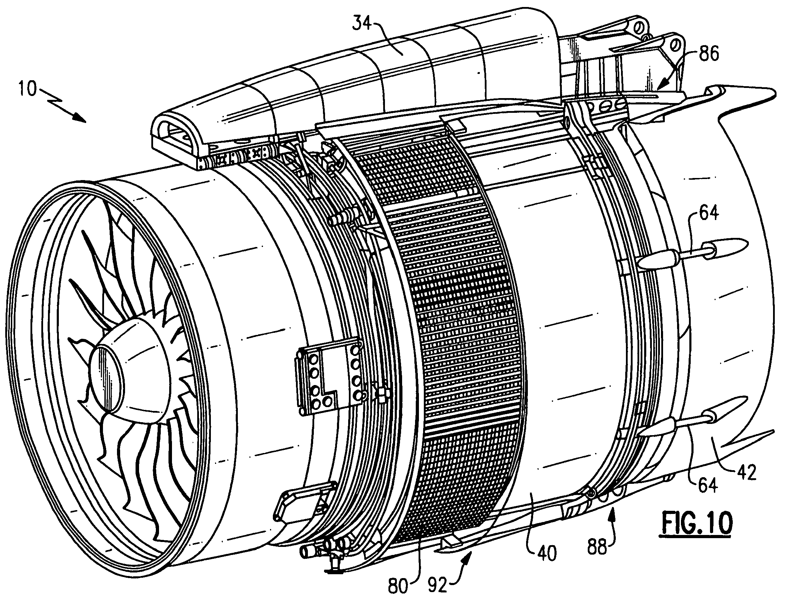

Referring to Figures 9 and 10, in another non-limiting embodiment, the example first nacelle section 42 slides along the track assembly 86, 88 on each of the first and second sectors 82, 84 (Figure 7) by the actuator 54. The upper track assembly 86 is located along the first nacelle section 40 adjacent the pylon 34 and the lower track assembly 88 is located along the lower Bi-Fi splitter L. The track assemblies 86, 88 supports a thrust reverse cowl assembly 92 within the first nacelle section 40 and the second nacelle section 42 such that the thrust reverse cowl assembly 92 and the VAFN assembly 45 may be operated in an independent manner. In other words, the second nacelle section 42 is movable between a closed position (Figure 9) and an open position (Figure 10) relative to the thrust reverse cowl assembly 68 along the engine axis 36. Movement of the first nacelle section 42 along to the open position uncovers the mesh 80 through which flow is directed to provide the desired reverse thrust. In the closed or open positions, the second nacelle section 42 remains independently movable to alter the exit area 46.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A nacelle assembly for a gas turbine engine comprising:
a first nacelle section (40); and
a second nacelle section (42) including a leading edge (78) and a trailing edge (80) and movable relative to the first nacelle section (40) for modifying an area of a nozzle opening (46); **characterized in that**
at least one non-powered stiffener (64) is attached between the second nacelle section (42) and the first nacelle section (40), the at least one stiffener (64) comprising a first base portion (66) mounted to the first nacelle section (40), a second base section (68) mounted to the second nacelle section (42), and a connecting member (70) received within each of the first base portion (66) and the second base portion (68).

2. The assembly as recited in claim 1, wherein the at least one stiffener (64) is mounted to an outer surface of the first nacelle section (40) and the second nacelle section (42).

3. The assembly as recited in claim 1, wherein the at least one stiffener (64) for example being mounted at a leading edge (78) of the outer surface of the second nacelle section (42).

4. The assembly as recited in any preceding claim, including a core (72) disposed under at least one of the first base portion (66) and the second base section (68) secured to the corresponding first and second nacelle portions (40,42).

5. The assembly as recited in any preceding claim, wherein the connecting member (70) is slidably received within one of the first base portion (66) and the second base portion (68) and attached to the other of the first base portion (66) and the second base portion (68).

6. The assembly as recited in any preceding claim, wherein the at least one stiffener (64) controls movement of the second nacelle section (42) in a direction radially outward of the first nacelle section (40), and/or accommodates axial movement of the at least second nacelle section (42) relative to the first nacelle section (40).

7. The assembly as recited in any preceding claim, including a core nacelle section (38) defined about an engine centerline axis and wherein the first nacelle section (40) and the second nacelle section (42) define an annular opening (46) disposed about the core nacelle section (38).

8. The assembly as recited in claim 7, wherein the second nacelle section (42) moves axially relative to the first nacelle section (40) to modify the area of the annular opening (46).

9. The assembly as recited in any preceding claim, wherein the second nacelle section (42) comprises at least two nacelle sections (82,84) movable axially relative to the first nacelle section (40).

10. The assembly as recited in any preceding claim, wherein the at least one stiffener (64) comprises a plurality of stiffeners (64) spaced circumferentially about the outer surface of the first and second nacelle sections (40,42).

11. The assembly as recited in any preceding claim, wherein the first nacelle section (40) comprises a thrust reverse cowl assembly (92) that is movable between an open position and a closed position, and the at least one second nacelle section (42) is independently movable relative to the thrust cowl assembly (92).

12. A high-bypass gas turbine engine (10) comprising:
a core engine (12) defined about an axis;
a turbofan (14) driven by the core engine (12) about the axis;
a core nacelle (38) defined at least partially about the core engine;and a nacelle assembly as receited in any preceding claim; wherein
the first fan nacelle section (40) disposed about the core nacelle (38) that defines a bypass flow path (50); and
the second fan nacelle section (42) is movable relative to the first fan nacelle section (40) to modify an area of the bypass flow path (50).

13. The gas turbine engine as recited in claim 12, wherein the at least one second fan nacelle section (42) comprises two second fan nacelle sections (82,84) disposed about a circumference of the bypass flow path (50), each of the two second fan nacelle sections (82,84) attached to an upper actuator (54) and a lower actuator (54) that drive the two second fan nacelle sections (82,84) axially relative to the first fan nacelle section (40) to vary an area of the bypass flow path (50).

14. The gas turbine engine as recited in claim 12 or 13, wherein first base portion of the at least one stiffener (64) comprises a first mount (68) attached to a leading edge of the second nacelle section (42) and the second base portion of the stiffener (64) comprises a second mount (66) attached to the first fan nacelle section (40) with the connector (70) received in both the first mount and the second mount, the connector (70) comprising a member (70) longitudinally aligned with the axis and movable responsive to movement of the second nacelle section (42) relative to the first nacelle section (40).

15. The gas turbine engine as recited in any of claims 12 to 14, wherein the at least one second fan nacelle section (42) is circular and movable axially away from the first fan nacelle section (40) to reduce an area of the bypass flow path (50).

## Patentansprüche

1. Gondelanordnung für eine Gasturbine, umfassend:
einen ersten Gondelabschnitt (40); und
einen zweiten Gondelabschnitt (42), einschließlich einer vorderen Kante (78) und einer hinteren Kante (80) und relativ zu dem ersten Gondelabschnitt (40) zur Modifizierung eines Bereichs einer Düsenöffnung (46) bewegbar; **dadurch gekennzeichnet, dass**
wenigstens ein nicht-elektrisches Versteifungselement (64) zwischen dem zweiten Gondelabschnitt (42) und dem ersten Gondelabschnitt (40) befestigt ist, wobei das wenigstens eine Versteifungselement (64) einen auf den ersten Gondelabschnitt (40) montierten ersten Basisabschnitt (66), einen auf den zweiten Gondelabschnitt (42) montierten zweiten Basisabschnitt (68) und ein sowohl in dem ersten Basisabschnitt (66) als auch in dem zweiten Basisabschnitt (68) aufgenommenes Verbindungselement (70) umfasst.

2. Anordnung nach Anspruch 1, wobei das wenigstens eine Versteifungselement (64) an eine außenliegende Oberfläche des ersten Gondelabschnitts (40) und des zweiten Gondelabschnitts (42) montiert ist.

3. Anordnung nach Anspruch 1, wobei das wenigstens eine Versteifungselement (64) beispielsweise auf eine vordere Kante (78) der außenliegenden Oberfläche des zweiten Gondelabschnitts (42) montiert ist.

4. Anordnung nach einem der vorhergehenden Ansprüche, einschließlich eines unter wenigstens entweder dem ersten Basisabschnitt (66) oder dem zweiten Basisabschnitt (68) angebrachten und an den entsprechenden ersten und zweiten Gondelabschnitten (40, 42) befestigten Kernelements (72).

5. Anordnung nach einem der vorhergehenden Ansprüche, wobei das Verbindungselement (70) in den ersten Basisabschnitt (66) oder den zweiten Basisabschnitt (68) gleitend aufgenommen ist und an dem jeweils anderen des ersten Basisabschnitts (66) und des zweiten Basisabschnitts (68) befestigt ist.

6. Anordnung nach einem der vorhergehenden Ansprüche, wobei das wenigstens eine Versteifungselement (64) die Bewegung des zweiten Gondelabschnitts (42) in eine Richtung radial außerhalb des ersten Gondelabschnitts (40) kontrolliert, und/oder axiale Bewegung des wenigstens zweiten Gondelabschnitts (42) relativ zu dem ersten Gondelabschnitt (40) aufnimmt.

7. Anordnung nach einem der vorhergehenden Ansprüche, einschließlich eines um eine Triebwerksmittellinien-Achse definierten Kern-Gondelabschnitts (38), wobei der erste Gondelabschnitt (40) und der zweite Gondelabschnitt (42) eine um den Kern-Gondelabschnitt (38) angeordnete ringförmige Öffnung (46) definieren.

8. Anordnung nach Anspruch 7, wobei sich der zweite Gondelabschnitt (42) zur Modifizierung des Bereichs der ringförmigen Öffnung (46) relativ zum ersten Gondelabschnitt (40) axial bewegt.

9. Anordnung nach einem der vorhergehenden Ansprüche, wobei der zweite Gondelabschnitt (42) wenigstens zwei relativ zum ersten Gondelabschnitt (40) axial bewegbare Gondelabschnitte (82, 84) umfasst.

10. Anordnung nach einem der vorhergehenden Ansprüche, wobei das wenigstens eine Versteifungselement (64) eine Mehrzahl an kreisförmig um die außenliegende Oberfläche des ersten und zweiten Gondelabschnitts (40, 42) angeordneten Versteifungselementen umfasst (64).

11. Anordnung nach einem der vorhergehenden Ansprüche, wobei der erste Gondelabschnitt (40) eine schubumkehrende Verkleidungsanordnung (92) umfasst, die zwischen einer offenen Position und einer geschlossenen Position bewegbar ist, und der wenigstens eine zweite Gondelabschnitt (42) relativ zu der schubumkehrenden Verkleidungsanordnung (92) unabhängig bewegbar ist.

12. Hochbypass-Gasturbinen-Triebwerk (10), umfassend:
ein um eine Achse definiertes Kern-Triebwerk (12);
einen von dem Kern-Triebwerk (12) um eine Achse angetriebenen Turbofan (14);
einen wenigstens teilweise um das Kern-Triebwerk definierten Kern-Gondelabschnitt (38); und
eine Gondelanordnung nach einem der vorhergehenden Ansprüche; wobei
der erste Bläsergondel-Abschnitt (40) um die Kern-Gondel (38) angeordnet ist, die einen Bypass-Strömungspfad (50) definiert; und
der zweite Bläsergondel-Abschnitt (42) relativ zu dem ersten Bläsergondel-Abschnitt (40) zur Modifizierung eines Bereichs des Bypass-Strömungspfads (50) bewegbar ist.

13. Gasturbinentriebwerk nach Anspruch 12, wobei der wenigstens eine zweite Bläsergondel-Abschnitt (42) zwei zweite kreisförmig um den Bypass-Strömungspfad (50) angeordnete Bläsergondel-Abschnitte (82, 84) umfasst, wobei jeder der beiden zweiten Bläsergondel-Abschnitte (82,84) an einem oberen Aktor (54) und einem unteren Aktor (54) befestigt ist, die die beiden zweiten Bläsergondel-Abschnitte (82,84) axial relativ zu dem ersten Bläsergondel-Abschnitt (40) zur Variierung des Bereichs des Bypass-Strömungspfads (50) antreiben.

14. Gasturbinentriebwerk nach den Ansprüchen 12 oder 13, wobei der erste Basisabschnitt des wenigstens einen Versteifungselements (64) eine an einem vorderen Ende des zweiten Gondelabschnitts (42) befestigte erste Halterung (68) umfasst und der zweite Basisabschnitt des Versteifungselements (64) eine an dem ersten Bläsergondel-Abschnitt (40) befestigte zweite Halterung (66) umfasst, wobei das Verbindungselement (70) sowohl in der ersten Halterung als auch in der zweiten Halterung aufgenommen ist, und wobei das Verbindungselement (70) ein längs an der Achse ausgerichtetes und ansprechend auf die relativ zum ersten Gondelabschnitt (40) verlaufende Bewegung des zweiten Gondelabschnitts (42) bewegbares Element (70) umfasst.

15. Gasturbinentriebwerk nach einem der Ansprüche 12 bis 14, wobei der wenigstens eine zweite Bläsergondel-Abschnitt (42) kreisförmig ist und axial von dem ersten Bläsergondel-Abschnitt (40) weg zur Reduzierung eines Bereichs des Bypass-Strömungspfads (50) bewegbar ist.

## Revendications

1. Assemblage de nacelle pour un moteur de turbine à gaz comprenant .
une première section de nacelle (40) ; et
une seconde section de nacelle (42) incluant un bord avant (78) et un bord arrière (80) et mobile par rapport à la première section de nacelle (40) pour modifier une zone d'une ouverture de buse (46) ; **caractérisé en ce que**
au moins un renfort non alimenté (64) est attaché entre la seconde section de nacelle (42) et la première section de nacelle (40), le au moins un renfort (64) comprenant une première portion de base (66) montée sur la première section de nacelle (40), une seconde portion de base (68) montée sur la seconde section de nacelle (42), et un élément de raccordement (70) reçu à l'intérieur de chacune de la première portion de base (66) et la seconde portion de base (68).

2. Assemblage selon la revendication 1, dans lequel le au moins un renfort (64) est monté sur une surface extérieure de la première section de nacelle (40) et la seconde section de nacelle (42).

3. Assemblage selon la revendication 1, dans lequel le au moins un renfort (64) par exemple étant monté à un bord avant (78) de la surface extérieure de la seconde section de nacelle (42).

4. Assemblage selon l'une quelconque des revendications précédentes, incluant un centre (72) disposé sous au moins une de la première portion de base (66) et la seconde portion de base (68) sécurisé aux première et seconde portions de nacelle (40, 42) correspondantes.

5. Assemblage selon l'une quelconque des revendications précédentes, dans lequel l'élément de raccordement (70) est reçu par glissement à l'intérieure de l'une de la première portion de base (66) et la seconde portion de base (68) et attachée à l'autre de la première portion de base (66) et la seconde portion de base (68).

6. Assemblage selon l'une quelconque des revendications précédentes, dans lequel au moins un renfort (64) contrôle le mouvement de la seconde section de nacelle (42) dans une direction radialement vers l'extérieur de la première section de nacelle (40), et/ou accueille un mouvement axial de la au moins seconde section de nacelle (42) par rapport à la première section de nacelle (40).

7. Assemblage selon l'une quelconque des revendications précédentes, incluant une section de nacelle centrale (38) définie sur un axe de référence du moteur et dans lequel la première section de nacelle (40) et la seconde section de nacelle (42) définissent une ouverture annulaire (46) disposée sur la section de nacelle centrale (38).

8. Assemblage selon la revendication 7, dans lequel la seconde section de nacelle (42) se déplace axialement par rapport à la première section de nacelle (40) pour modifier la zone de l'ouverture annulaire (46).

9. Assemblage selon l'une quelconque des revendications précédentes, dans lequel la seconde section de nacelle (42) comprend au moins deux sections de nacelle (82, 84) déplaçables axialement par rapport à la première section de nacelle (40).

10. Assemblage selon l'une quelconque des revendications précédentes, dans lequel le au moins un renfort (64) comprend une pluralité de renforts (64) espacés de manière circonférentielle sur la surface extérieure des première et seconde sections de nacelle (40, 42).

11. Assemblage selon l'une quelconque des revendications précédentes, dans lequel la première section de nacelle (40) comprend un assemblage de carénage d'inversion de poussée (92) qui est déplaçable entre une position ouverte et une position fermée, et la au moins une seconde section de nacelle (42) est déplaçable indépendamment par rapport à l'assemblage de carénage d'inversion de poussée (92).

12. Moteur de turbine à gaz à dilution élevée (10) comprenant :
un moteur central (12) défini sur un axe ;
un turboréacteur (14) entraîné par le moteur central (12) sur l'axe ;
une nacelle centrale (38) définie au moins partiellement sur le moteur central ; et
un assemblage de nacelle selon l'une quelconque des revendications précédentes ; dans lequel
la première section de nacelle de ventilateur (40) disposée sur la nacelle centrale (38) qui définit un circuit d'écoulement de dérivation (50) ; et
la seconde section de nacelle de ventilateur (42) est déplaçable par rapport à la première section de nacelle de ventilateur (40) pour modifier la zone du circuit d'écoulement de dérivation (50).

13. Moteur de turbine à gaz selon la revendication 12, dans lequel la au moins une seconde section de nacelle de ventilateur (42) comprend deux sections de nacelle de ventilateur (82, 84) disposées sur une circonférence du circuit d'écoulement de dérivation (50), chacune des deux secondes sections de nacelle de ventilateur (82, 84) attachées à un actionneur supérieur (54) et un actionneur inférieur (54) qui entraînent les deux secondes sections de nacelle de ventilateur (82, 84) axialement par rapport à la première section de nacelle de ventilateur (40) pour faire varier une zone du circuit d'écoulement de dérivation (50).

14. Moteur de turbine à gaz selon la revendication 12 ou 13, dans lequel la première portion de base du au moins un renfort (64) comprend un premier support (68) attaché à un bord avant de la seconde section de nacelle (42) et la seconde portion de base du renfort (64) comprend un second support (66) attaché à la première section de nacelle de ventilateur (40) avec le connecteur (70) reçu à la fois dans le premier support et le second support, le connecteur (70) comprenant un élément (70) aligné longitudinalement avec l'axe et déplaçable en réponse au mouvement de la seconde section de nacelle (42) par rapport à la première section de nacelle (40).

15. Moteur de turbine à gaz selon l'une quelconque des revendications 12 à 14, dans lequel la au moins une seconde section de nacelle de ventilateur (42) est circulaire et déplaçable axialement de la première section de nacelle de ventilateur (40) pour réduire une zone du circuit d'écoulement de dérivation (50).
